# EUROPEAN PATENT APPLICATION

(11) **EP 2 728 733 A1**
(43) Date of publication of application: **07.05.2014**
(21) Application number: 12803729.8
(22) Date of filing: 12.06.2012
(51) Int. Cl.: H02M 7/48, H02H 7/122, H02H 9/04

(54) **POWER CONVERSION DEVICE**

(30) Priority: 29.06.2011 JP 2011144662
(71) Applicant: Fuji Electric Co., Ltd., Kawasaki-shi, Kanagawa 210-9530 (JP)
(72) Inventor: ODAKA Akihiro, Kawasaki-shi Kanagawa 210-9530 (JP); TOBA Akio, Kawasaki-shi Kanagawa 210-9530 (JP); AKIBA Shinya, Kawasaki-shi Kanagawa 210-9530 (JP)
(74) Representative: MERH-IP Matias Erny Reichl Hoffmann
(86) International application number: PCT/JP2012/064987
(87) International publication number: WO 2013/002016

(57) **Abstract**

The invention relates to a power conversion device including an inverter which converts a voltage of a direct current power source 2 to an alternating current voltage of any magnitude and frequency using semiconductor switches 4, and supplies the voltage to a load such as an electric motor 5, wherein a switch unit 3 is provided in the direct current portion of the inverter. In the invention, a capacitor 1 is connected, via the switch unit 3, between a positive electrode and a negative electrode of the direct current power source 2, and a constant voltage element wherein when a fixed voltage or higher is reached, an electrical resistance decreases abruptly, current flows, and voltages between both ends are limited to specific voltage, is connected in parallel to the capacitor 1. Herein, a varistor 6, a zener diode 7, or an avalanche diode is used, or alternatively, a combination of the zener diode 7 and a self-turn-off semiconductor element (an IGBT, a MOSFET, or the like), or the like, is used, as the constant voltage element. Owing to the heretofore described configuration, each part configuring the power conversion device is protected against overvoltage, thus avoiding an increase in the capacitance and volume of the capacitor 1.

## Description

### Technical Field

The present invention relates to a configuration of a power conversion device.

### Background Art

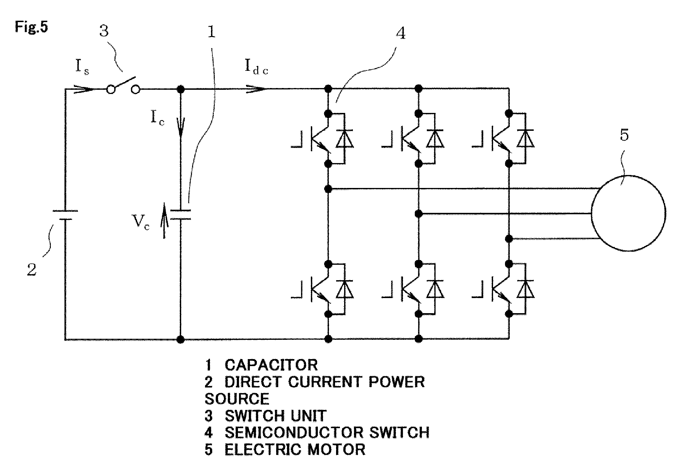

Fig. 5 shows a configuration diagram of a heretofore known electric vehicle power conversion device shown in PTL 1. In Fig. 5, an inverter formed of a capacitor 1 and semiconductor switches 4 is connected to a direct current power source 2, that is, a battery, via a switch unit 3, and an electric motor 5 acting as a load is connected to the inverter. The inverter formed of the capacitor 1 and semiconductor switches 4, by turning on and off appropriate semiconductor switches 4 at appropriate timings, converts direct current voltage to three-phase alternating current voltage of any magnitude and frequency, and adjusts the rotation speed of the electric motor 5, that is, an electric vehicle speed. As the operating principle of the inverter is universal, a description is omitted here.

The switch unit 3 in Fig. 5, being for connecting or disconnecting the inverter and the direct current power source 2, is provided mainly for a safety reason, and a direct current relay is generally used in the application to an electric vehicle. The switch unit 3 is provided only on the positive side of the direct current power source 2 in Fig. 5, but may be provided on the negative side too for the purpose of further securing safety.

Meanwhile, as the electric motor 5, a permanent magnet synchronous motor with great efficiency, of several types of electric motors, is often used in the application to an electric vehicle. Also, although not shown, a resistor may be connected in parallel to the capacitor 1 for the purpose of discharging the capacitor 1 when the switch unit 3 is opened after the inverter has finished operating.

### Citation List

### Patent Literature

PTL 1: JP-A-2007-89334 (paragraphs [0017] and [0018], Fig. 1, and the like)

### Summary of Invention

### Technical Problem

Now, it has been necessary to select a capacitance value so as to satisfy at least the following three requirements as the capacitance value of the capacitor 1 of a direct current portion configuring the inverter.
(1) A capacitance value such that the amount of pulsation of capacitor voltage generated as a result of switching of the semiconductor switches 4 configuring the inverter does not affect the control performance of the electric motor 5.
(2) A capacitance value such that a resonant frequency determined by the inductance component (not shown) between the capacitor 1 of an inverter and the direct current power source 2 and the capacitance value of the capacitor 1 is lower than a switching frequency of the inverter.
(3) When the inverter stops operating due to some factors while operating (while the electric motor 5 is rotating) and the switch unit 3 also attains an open condition (hereafter, causing the device to stop in this kind of condition will be called an emergency stop), inductive energy accumulated in the electric motor 5 is absorbed by the capacitor 1, and the voltage of the capacitor 1 rises. A capacitance value such that the capacitor voltage at this time is equal to or lower than a breakdown voltage of semiconductors configuring the inverter or a breakdown voltage of the capacitor 1 itself.

A brief description will be given of each of the heretofore described (1) to (3). Firstly, (1) will be described.

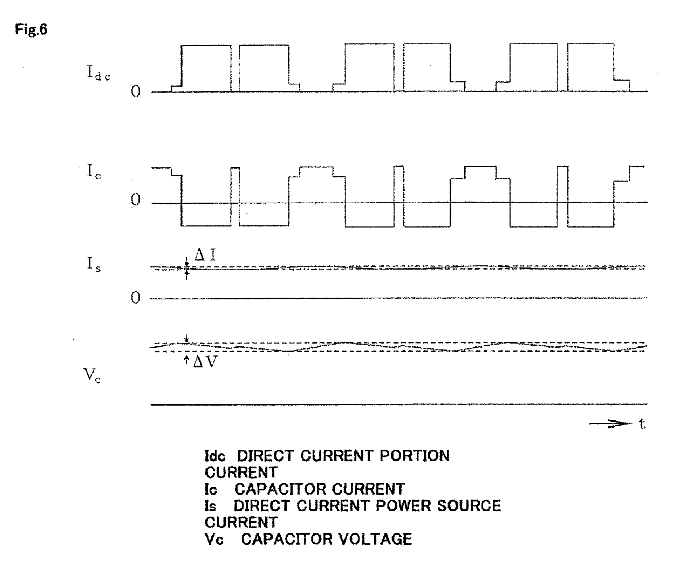

Fig. 6 shows examples of the respective current waveforms of portions, and an example of a voltage waveform of the capacitor 1, of the power conversion device shown in Fig. 5. The time axis range falls in the vicinity of a switching cycle of the semiconductor switches 4, and is a sufficiently short time range with respect to an output cycle of the inverter. Also, reference signs in Fig. 6 correspond to reference signs in Fig. 5.

Now, a direct current portion current I_{dc} of the inverter forms a high frequency pulse train current waveform as a result of switching of the semiconductor switches 4 of the inverter. Meanwhile, a direct current power source current Iₛ with less pulsation flows through the direct current power source 2. The reason for this is that a high frequency component of the direct current portion current I_{dc} is attenuated by an LC filter formed of the inductance component between the direct current power source 2 and the capacitor 1 of the inverter and the capacitor 1. Also, a differential current of I_{dc} and Iₛ, in other words, a large portion of the high frequency component included in the direct current portion current I_{dc}, flows through the capacitor 1 as a current I_{c}.

Herein, as the capacitor current I_{c} is nothing but current which carries out charging and discharging of the capacitor 1, a pulsating voltage ΔV is generated in the capacitor 1 in accordance with the frequency and amplitude of the capacitor current I_{c} which is pulse train current. That is, it is necessary to determine the capacitance value of the capacitor 1 so that the amount of pulsation of capacitor voltage V_{c} generated as a result of switching of the semiconductor switches 4 configuring the inverter is such as not to affect the control performance of the electric motor 5.

Next, (2) will be described. As previously described, the high frequency component of the direct current portion current I_{dc} is attenuated by the LC filter configured of the inductance component between the direct current power source 2 and the capacitor 1 of the inverter and the capacitor 1, and the direct current power source current Iₛ including a pulsation component ΔI flows through the direct current power source 2.

However, when the switching frequency of the inverter is lower than the resonant frequency of the LC filter, the high frequency component included in the direct current portion current I_{dc} is not attenuated, and the direct current power source current Iₛ including a most portion of the resonant frequency component of the LC filter flows through the direct current power source 2. Herein, as there arises a problem that a flow of high frequency current through the direct current power source 2 generally lowers the life span thereof, it is desirable that current wherein the high frequency current is attenuated by the LC filter flows through the direct current power source 2. Because of this, it is necessary to determine the capacitance value of the capacitor 1 so that the resonant frequency determined by the inductance component between the capacitor 1 of the inverter and the direct current power source 2 and the capacitance of the capacitor 1 is lower than at least the switching frequency of the inverter.

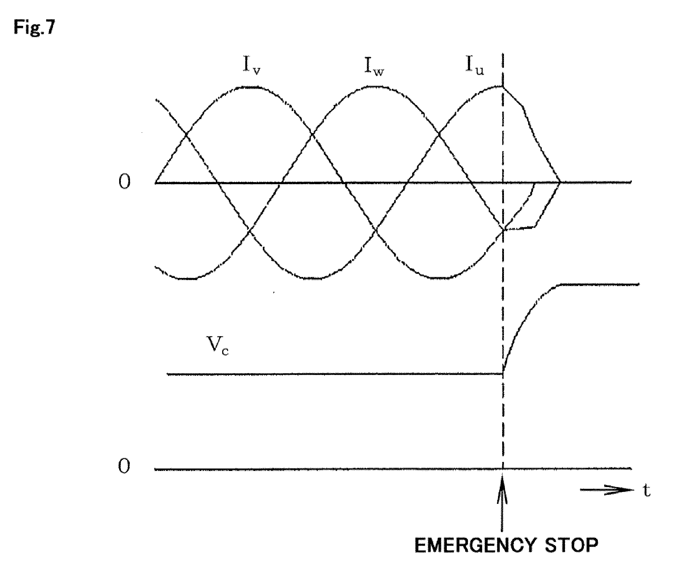

Furthermore, (3) will be described. Suppose that the inverter stops operating for the purpose of bringing the electric motor 5 to an emergency stop with the power conversion device while the electric motor 5 is in operation, simultaneously with which the switch unit 3 provided between the direct current power source 2 and the inverter attains an open condition. Fig. 7 shows examples of inverter output current waveforms I_{u'}, I_{v'}, and I_{w}, and a voltage waveform V_{c} of the capacitor 1, in this case.

In Fig. 7, the broken line is the timing of the emergency stop, and at this timing, the inverter stops operating, simultaneously with which the switch unit 3 is opened. When the inverter stops operating, and the switch unit 3 is opened, inductive energy accumulated in the induction component of the electric motor 5 is absorbed by the capacitor 1, and the capacitor voltage V_{c} rises sharply. The capacitor voltage V_{c} rising sharply rises to at least the maximum value or greater of the induced voltage of the electric motor 5. Also, the magnitude of rise (the amount of change) in the capacitor voltage V_{c} is larger when the previously described emergency stop process is executed while the electric motor 5 is in regenerative operation (while energy is being transferred from the electric motor to the direct current power source), than when the previously described emergency stop process is executed while the electric motor 5 is in powering operation (while energy is being transferred from the direct current power source 2 to the electric motor 5).

Herein, when the raised capacitor voltage V_{c} is equal to or higher than the breakdown voltage of parts configuring the inverter, this results in a breakdown of parts configuring the device. However, it is necessary to select a capacitance value such as not to exceed the breakdown voltage of the semiconductors configuring the inverter or the breakdown voltage of the capacitor itself even when the capacitor 1 absorbs the inductive energy of the electric motor 5 when the power conversion device comes to an emergency stop while in operation. It goes without saying that the maximum value of the induced voltage of the electric motor 5 has to be set to be equal to or lower than the breakdown voltage of the parts configuring the power conversion device.

Of the previously described factors (1) to (3) determining the capacitance, (3) is often dominant, and a need to use a capacitor 1 with a sufficiently great capacitance value arises in the previously described (1) and (2), as a result preventing a reduction in the size of the device.

In particular, as the type of the capacitor 1, it is common to use an electrolytic capacitor in an industrially applied power conversion device.

Meanwhile, in an electric vehicle power conversion device, it is demanded to use a film capacitor having the advantage of having a long life span and a wide range of application temperature as compared with an electrolytic capacitor. However, as a film capacitor has low capacitance per unit volume as compared with an electrolytic capacitor, there has been a problem that an attempt to satisfy the previously described (3) results in an increase in the volume of the device.

Also, the inductive energy of the electric motor referred to in the previously described (3) is determined by synchronous inductance in the case of a synchronous motor, and determined by leakage inductance in the case of an induction motor. Herein, the inductance of a synchronous motor is normally several times higher than the leakage inductance of an induction motor, while the inductive energy of a synchronous motor is also several times higher than that of an induction motor. That is, when the electric motor 5 which is a load is a synchronous motor, the capacitance of the capacitor 1 which satisfies the previously described (3) is higher than when the electric motor 5 which is a load is an induction motor. However, no problem has arisen in an industrial power conversion device to which are applied an electrolytic capacitor and an induction motor, while in an electric vehicle power conversion device to which are applied a film capacitor and a permanent magnet synchronous motor, the capacitance of the capacitor 1, that is, the volume of the capacitor 1, has to be increased, and there has been a problem that the volume of the capacitor 1 increases significantly in order to meet the previously described requirement (3).

Therefore, an object of the invention is to protect each part configuring a power conversion device against overvoltage.

Also, another object of the invention is to prevent an increase in the capacitance and volume of a capacitor provided in the direct current portion of an inverter, thus avoiding an increase in the size of a power conversion device.

### Solution to Problem

In order to achieve the heretofore described object, the invention aims at a power conversion device including an inverter which converts the voltage of a direct current power source to an alternating current voltage of any magnitude and frequency using semiconductor switches, and supplies the voltage to a load, wherein a switch unit is provided between the direct current portion of the inverter and the direct current power source.

Further, the power conversion device of the invention is configured by connecting a capacitor, via the switch unit, between a positive electrode and a negative electrode of the direct current power source, and connecting a constant voltage element, wherein when a fixed voltage or higher is reached, an electrical resistance decreases abruptly, current flows, and voltages on both ends are limited to specific voltage, in parallel to the capacitor.

Herein, as the constant voltage element, it is possible to use a varistor, a zener diode, or an avalanche diode, or alternatively, to use a combination of a zener diode and a self-turn-off semiconductor element (an IGBT, a MOSFET, or the like), or the like.

### Advantageous Effects of Invention

According to the invention, it is possible to protect each part configuring the power conversion device against overvoltage.

Also, according to the invention, it is possible to prevent an increase in the capacitance and volume of the capacitor provided in the direct current portion of the inverter, thus avoiding an increase in the size of the power conversion device.

### Brief Description of Drawings

[Fig. 1] Fig. 1 is a configuration diagram of a first embodiment of the invention.
[Fig. 2] Fig. 2 is a configuration diagram of a second embodiment of the invention.
[Fig. 3] Fig. 3 is a configuration diagram of a third embodiment of the invention.
[Fig. 4] Fig. 4 is a configuration diagram of a fourth embodiment of the invention.
[Fig. 5] Fig. 5 is a configuration diagram of a heretofore known power conversion device.
[Fig. 6] Fig. 6 is an operation waveform diagram of the heretofore known power conversion device.
[Fig. 7] Fig. 7 is an operation waveform diagram of the heretofore known power conversion device.

### Description of Embodiments

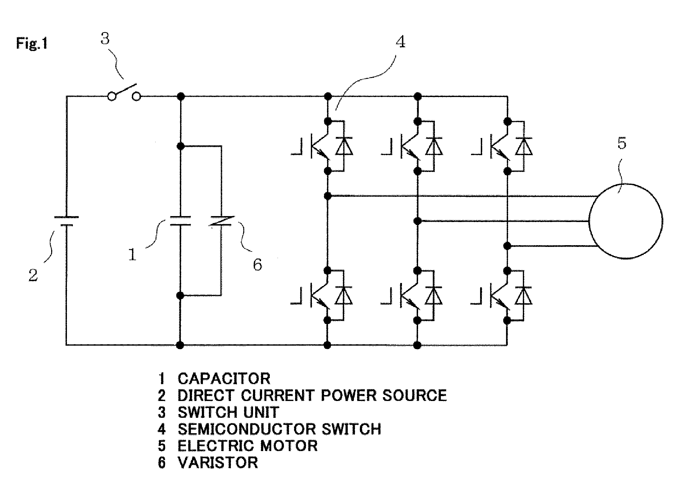

Fig. 1 shows a configuration diagram of a first embodiment of the invention.

The difference of the first embodiment from the heretofore known technology of Fig. 5 is that a varistor 6 which is a constant voltage element is connected in parallel to a capacitor 1 provided in a direct current voltage portion of an inverter (the invention of claim 1 or 3). In Fig. 1, parts the same as those of Fig. 5 are given the same reference numerals, and a description will be omitted.

The first embodiment shown in Fig. 1 applies the varistor 6 such that a clamping voltage thereof is higher than a voltage value of a direct current power source 2 at which a power conversion device can operate normally, higher than a maximum voltage value of an induced voltage of an electric motor 5 connected as a load, and furthermore, lower than a breakdown voltage of all parts configuring the power conversion device (the invention of claim 2). A supplemental description will be given of the maximum voltage value of the induced voltage of the electric motor 5. The magnitude of the induced voltage of the electric motor 5 varies according to a rotation speed of the electric motor 5, but the maximum voltage value here means a magnitude of highest induced voltage within an estimated rotation speed range of the electric motor 5, and corresponds to an amplitude of induced voltage generated between lines.

In the case of adopting the heretofore described kind of configuration, as the voltage of the direct current power source 2 is equal to or lower than the clamping voltage of the varistor 6 when in normal operation, the varistor 6 does not operate, as a result of which only the capacitor 1 contributes to the normal operation. That is, the capacitor may be selected as the capacitor 1 so long as the capacitor has a capacitance value satisfying the previously described factors (1) and (2) . Meanwhile, when the power conversion device comes to an emergency stop, the inductive energy of the electric motor 5 is absorbed by both the capacitor 1 and varistor 6. That is, when the voltage of the capacitor 1 rises by the capacitor 1 absorbing the inductive energy of the electric motor 5, and is about to be equal to or higher than the clamping voltage of the varistor 6, the resistance value of the varistor 6 decreases abruptly, and current flows through the varistor 6. That is, as a result of this, the voltage of the capacitor 1 is suppressed by the clamping voltage of the varistor 6.

Herein, as the kind of varistor 6 whose clamping voltage is lower than the breakdown voltage of each part configuring the power conversion device is used, as previously described, it is possible to protect each part configuring the power conversion device against overvoltage. Also, after the inductive energy of the electric motor 5 has been absorbed by the varistor 6, the magnitude of the terminal voltage of the electric motor 5 becomes equal to that of the induced voltage. Therefore, in the event of setting the condition that the clamping voltage of the varistor 6 is higher than the induced voltage, as previously described, no current flows through the varistor 6, and the electric motor 5 does nothing but run idle with no current flowing therethrough, and thus attains a safe condition.

Consequently, according to the first embodiment, it is possible to cause the previously described requirement (3) to be satisfied by the capacitor 1 and varistor 6. Herein, as the varistor 6 is small and inexpensive, in general, as compared with the capacitor 1, it is possible to configure a small and inexpensive power conversion device.

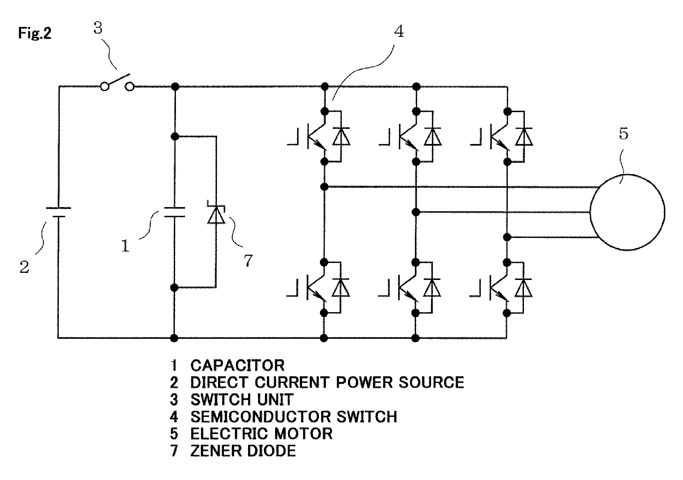

Fig. 2 shows a configuration diagram of a second embodiment of the invention. The difference from Fig. 1 is that a zener diode 7 is connected in place of the varistor 6. As the operation and the advantageous effect thereof are the same as those described in the first embodiment, a description will be omitted.

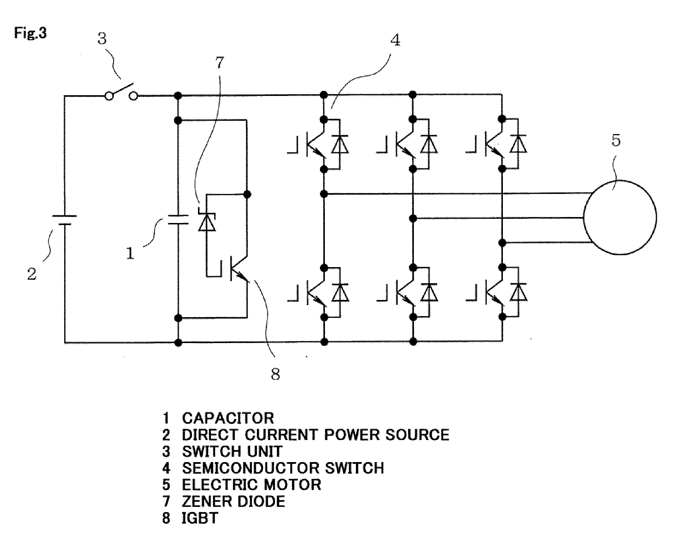

Fig. 3 shows a configuration diagram of a third embodiment of the invention. The difference from Fig. 1 is that an IGBT 8 which is a self-turn-off semiconductor element is connected in place of the varistor 6, and that a zener diode 7 is inserted between a collector and gate of the IGBT 8, and an anode of the zener diode 7 is connected to the gate of the IGBT 8.

Herein, the collector of the IGBT 8 is referred to as a current inflow terminal, an emitter as a current outflow terminal, and the gate as a control terminal.

In the case of adopting the kind of configuration of Fig. 3, when the voltage between the collector and gate of the IGBT 8 (which is substantially equal to the voltage between the collector and emitter, that is, capacitor voltage) is equal to or higher than the zener voltage of the zener diode 7, the gate of the IGBT 8 is charged so as to be equal to the zener voltage, as a result of which the IGBT 8 functions as a constant voltage element. In this case, the IGBT 8 operates in an active state. That is, current is caused to flow in a condition in which the voltage between the collector and emitter has substantially the same level of voltage as that of the zener diode 7, and energy is consumed not by the zener diode 7 but by the IGBT 8. As a self-turn-off semiconductor element, for example, a MOSFET may be used in place of the IGBT 8.

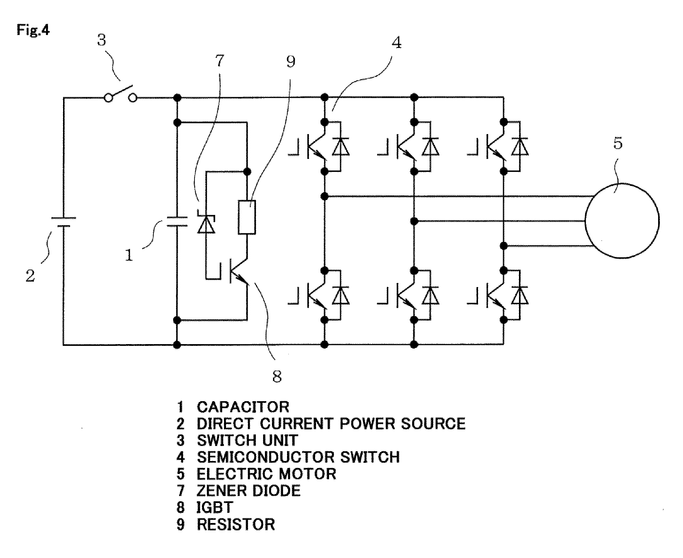

Fig. 4 shows a configuration diagram of a fourth embodiment of the invention. The difference of the fourth embodiment from the third embodiment is that a resistor 9 is inserted on a collector side of the IGBT 8 in Fig. 3. In this case, when the voltage between a positive side terminal of a capacitor 1 and a gate terminal of an IGBT 8 (which is substantially equal to capacitor voltage) is equal to or higher than the zener voltage of a zener diode 7, the gate of the IGBT 8 is charged, as a result of which the series circuit of the IGBT 8 and resistor 9 functions as a constant voltage element. In this case, the IGBT 8 operates in an active state, and energy is consumed by the series circuit of the resistor 9 and IGBT 8. That is, as opposed to the third embodiment, the fourth embodiment has the advantage that it is possible to reduce the amount of energy consumed by the IGBT 8, and thus possible to apply a small IGBT 8. In the fourth embodiment too, as a self-turn-off semiconductor element, a MOSFET may be used in place of the IGBT 8. Also, in the third embodiment and fourth embodiment, a resistor may be connected between the gate and emitter of the IGBT 8 for the purpose of stabilizing the operation of the IGBT 8.

Also, in the first to fourth embodiments, a resistor (not shown) may be connected in parallel to the capacitor 1. In this case, when the power conversion device stops operating, charge accumulated in the capacitor 1 is discharged by the heretofore described resistor connected in parallel, thus enabling securement of the safety of the device.

Furthermore, in the second to fourth embodiments, an avalanche diode may be used in place of the zener diode.

Although not shown, three-phase alternating current power is once rectified to direct current by a diode rectifier circuit or the like, and subsequently, there is a case in which a varistor is connected between the positive and negative electrodes of the direct current portion of an industrial power conversion device configured of an inverter using a capacitor and semiconductor switches, in the same way as in the first to fourth embodiments. The purpose of connecting the varistor is to absorb surge voltage (for example, lightning surge) flowing in mainly from a power system, and the operation period of the varistor is a level of several µs.

Meanwhile, in an electric vehicle wherein the direct current power source 2 is a battery, as in the first to fourth embodiments, the equivalent of the heretofore described surge does not occur from the direct current power source 2 (battery) . The purpose of inserting the varistor acting as a constant voltage element in the first embodiment of Fig. 1 is to suppress a rise in the direct current voltage of the capacitor 1 due to the electromagnetic energy of the electric motor 5 when a power distribution to the electric motor 5 is instantly interrupted by the inverter, and the purpose differs from in the industrial power conversion device. Further, the operation period of the varistor, during which the electric constant of the electric motor 5 acts in a dominant fashion, is a level of several ms. This point also differs from in the case of responding to the surge in the industrial power conversion device, and energy to be absorbed also differs.

Also, it is often the case that an electrolytic capacitor is used in the industrial power conversion device, as previously described, while it is often the case that a film capacitor with low capacitance is used in the application to an electric vehicle. Therefore, when the electromagnetic energy of the electric motor 5 is the same, the amount of rise (the amount of change) in capacitor voltage increases in the case of the electric vehicle power conversion device as compared with the industrial power conversion device.

As previously described, in the electric vehicle power conversion device, it is demanded to use a film capacitor having the advantage of having a long life span, a wide range of application temperature, and the like, as compared with an electrolytic capacitor. However, the film capacitor has low capacitance per unit volume as compared with the electrolytic capacitor. Consequently, in the electric vehicle power conversion device of which are demanded a further reduction in size, and the use of a film capacitor, as compared with the industrial power conversion device, the capacitance value of the capacitor inevitably has to be of the order of several hundred times smaller than that of the industrial power conversion device. In this case, when the heretofore described kind of situation occurs, the amount of rise (the amount of change) in capacitor voltage increases on the order of several ten times.

However, as a constant voltage element, such as a varistor or a zener diode, is connected in parallel to the capacitor 1, as in the invention, thereby enabling the voltage applied to the capacitor 1 to be limited by the constant voltage element, it is possible to avoid an increase in the capacitance and size of the capacitor 1. Consequently, it can be said that the invention is remarkably effective in the application to an electric vehicle.

### Reference Signs List

- 1: Capacitor
- 2: Direct current power source
- 3: Switch unit
- 4: Semiconductor switch
- 5: Electric motor
- 6: Varistor
- 7: Zener diode
- 8: IGBT
- 9: Resistor

## Claims

1. A power conversion device, comprising:
an inverter which converts the voltage of a direct current power source to an alternating current voltage of any magnitude and frequency using semiconductor switches, and supplies the voltage to a load; and
a switch unit being provided between the direct current portion of the inverter and the direct current power source, the power conversion device being **characterized in that**
a capacitor is connected, via the switch unit, between a positive electrode and a negative electrode of the direct current power source, and
a constant voltage element in which when a fixed voltage or higher is reached, an electrical resistance decreases abruptly, current flows, and voltages on both ends are limited to specific voltage, is connected in parallel to the capacitor.

2. The power conversion device according to claim 1, **characterized in that**
a clamping voltage of the constant voltage element is voltage which is higher than a direct current power source voltage value at which the power conversion device can operate normally when the constant voltage element is absent, is higher than a maximum voltage value of an induced voltage of an electric motor connected as a load, and is lower than a breakdown voltage of all parts configuring the power conversion device.

3. The power conversion device according to claim 1 or 2, **characterized in that**
the constant voltage element is a varistor.

4. The power conversion device according to claim 1 or 2, **characterized in that**
the constant voltage element is a zener diode or an avalanche diode.

5. The power conversion device according to claim 1 or 2, **characterized in that**
the constant voltage element includes a self-turn-off semiconductor element and a zener diode, and
the zener diode is connected between a current inflow terminal of the self-turn-off semiconductor element and a control terminal of the self-turn-off semiconductor element, and that
the current inflow terminal is connected to a positive side of the capacitor, and a current outflow terminal of the self-turn-off semiconductor element is connected to a negative side of the capacitor.

6. The power conversion device according to claim 1 or 2, **characterized in that**
the constant voltage element includes a self-turn-off semiconductor element, a resistor, and a zener diode, and
one end of the resistor is connected to the current inflow terminal of the self-turn-off semiconductor element, and the zener diode is connected between the other end of the resistor and the control terminal of the self-turn-off semiconductor element, and that
the other end of the resistor is connected to the positive side of the capacitor, and the current outflow terminal of the self-turn-off semiconductor element is connected to the negative side of the capacitor.
